# EUROPEAN PATENT SPECIFICATION

(11) **EP 4 502 492 B1**
(45) Date of publication and mention of the grant of the patent: **19.11.2025**
(21) Application number: 24382784.7
(22) Date of filing: 18.07.2024
(51) Int. Cl.: F24S 25/61, H02S 20/23, H02S 20/24

(54) **BRACKET FOR FIXING SOLAR PANELS TO A ROOF**
HALTERUNG ZUR BEFESTIGUNG VON SOLARPANEELEN AUF EINEM DACH
SUPPORT POUR FIXER DES PANNEAUX SOLAIRES À UN TOIT

(30) Priority: 01.08.2023 ES 202331420 U
(43) Date of publication of application: 05.02.2025
(73) Proprietor: Inmovidasa, S.L., 08445 Canoves Barcelona (ES)
(72) Inventor: Rodríguez Vidal, Manuel, 08445 Canoves (ES)
(74) Representative: Pons IP

(56) References cited:
- ES-U- 1 299 036
- JP-A- 2018 135 736
- JP-A- H0 726 683
- JP-A- H09 228 595
- JP-B2- 4 400 875
- US-A1- 2012 198 779

## Description

### OBJECT OF THE INVENTION

The present invention relates to a support for fixing solar panels to roofs whereby waterproofing solutions are achieved, it is independent of the height of the panels, being able to be in an inclined position, and it greatly facilitates the assembly and disassembly of the solar panels of an installation. Furthermore, it also allows the waterproofing sheets to be updated using the same fixing supports and only disassembling part of the body of the support. This even makes it possible to change the type of waterproofing sheet, without having to remove the existing waterproofing in order to prevent loss of sealing in the roof updating process.

### BACKGROUND OF THE INVENTION

In the current state of the art, many ways of fixing solar panels to a roof or roofing are known. Panels traditionally come in strips, whereby they are fixed on slats that are fixed to the roof using brackets or similar fixing elements. These fixings have a problem where they open paths that may create dampness under the roof where the solar panels have been installed. Furthermore, when these problems are solved with the incorporation of waterproofing sheets, it is not easy to update the waterproofing sheets due to ageing.

Document JPH0726683A discloses the easy installation of a solar panel on a roof by means of screws, wherein the surface of the roof is curved, placing the solar panel on a U-shaped support fixed to the surface of the roof panel and fixing the solar panel via one edge of the frame held by a screw. An assembly is formed in an inverted U-shape by the left and right vertical legs and a horizontal top part that connects the upper ends of both legs. A plurality of the assemblies is fixed by welding the lower ends of the legs onto the surface of a roof panel. A solar panel is mounted directly along the edges of the frame, and the members of the edge are connected in a square bar shape. Furthermore, the mounting pins protrude downward from the lower portion of the edge elements in the inclined direction of a roof. The mounting pins are inserted from the upper sections of the pin holes of a top part, and the edges of the frame are placed on the support, and the nuts are screwed from the underside of the top part and the mounting pins are held and fixed.

The solar panel is inserted and held to the panel frames by pins inserted from the side faces to the edge members in the direction of the beam that are arranged in an inverted L-shape.

Document US2012198779 provides a solar panel mounting structure that is excellent in terms of ease of cleaning and ease of maintenance after construction. A solar panel mounting structure includes: a fixing member, such as a corner member, which has an L-shaped cross section, and is firmly fixed on a roof made up of a metal plate as a magnetic material; solar panels, each of which is rotatably held on the fixing element while interposing an insertion/extraction hinge mounted on an upper edge of an erected portion of the fixing element; and a magnetic engaging device provided between the solar panel and the roof in order to detachably fix the solar panel to the roof. The fixing member is firmly fixed to the roof while interposing a double-sided adhesive tape and an adhesive agent therebetween. The magnetic engaging device includes: a cup-shaped casing mounted on a lower surface of the solar panel by a screw; and a ferrite magnet 20 firmly fixed on the casing.

Document ES1299036U relates to a solar panel support that allows the exact and quick assembly of panels. It is intended for placement thereof on flat, normally horizontal surfaces. It is preferably intended for photovoltaic panels but may be used for heating fluids. JP2018135736A discloses a support for fixing solar panels to a roof, provided with a rainproof cover.

### DESCRIPTION OF THE INVENTION

The present invention relates to a support for fixing solar panels to a roof whereby waterproofing solutions are achieved and it is independent of the height of the panels, greatly facilitating the assembly and disassembly of the solar panels of an installation.

The support incorporates a double sealing barrier system, making it perfectly watertight and avoiding problems due to lack of waterproofing. It is also made of materials with high corrosion resistance that allow it to be installed in aggressive environments.

Likewise, it also provides flexibility to be engaged at different heights, such that it is perfectly applied to solar panel structures, as they always require different degrees of inclination depending on the location.

Furthermore, installation is extremely simple, regardless of whether the solar panels are going to be installed on new roofs or already existing roofs.

The support of the invention is focused on fixing a structure intended to house solar panels, which will rarely be carried out individually, but rather the installation will be carried out in groups, having a plurality of supports. In fact, it can be focused on housing solar panels, individually, or also slats of a structure that acts as a rail to house an entire strip of panels.

The installation system is also intended to make the updating or repair of waterproofing due to any drawback very affordable, taking advantage of the same supports.

In this way, the invention consists of a support for fixing solar panels to a roof that comprises, as main elements, a plate, intended to be fixed to the roof using a plurality of screws, a waterproofing sheet, intended to be fixed on the roof covering the plate, and a protective cup, intended to be fixed to the plate.

The plate comprises a bolt for fixing to the protective cup. Moreover, the waterproofing sheet has a hole for the bolt to pass through, and the protective cup comprises a nut with one end accessible from the inner surface and with the other blind end where it incorporates a pin for fixing the solar panels using anchoring elements.

Thus, the plate is fixed to the roof using screws, and the protective cup is fixed to the plate by screwing the nut onto the bolt to form a solid joint.

The plate preferably comprises an elevation for the location of the bolt, which is where the waterproofing sheet has the hole, so that if water were to enter, it could not pass through the roof, as it is at a height.

Furthermore, the support preferably comprises an internal sealing gasket to seal the joint between the bolt and the waterproofing sheet and an external sealing gasket to seal the joint between the protective cup and the waterproofing sheet.

### DESCRIPTION OF THE DRAWINGS

To complete the description of the invention, and for the purpose of helping to make the features thereof more readily understandable, according to a preferred exemplary embodiment thereof, a set of drawings is included wherein, by way of illustration and not limitation, the following figures have been represented:
- Figure 1 represents an exploded front view of the elements that constitute the support of the invention.
- Figure 2 represents a front view of the support with the plate already fixed to the roof.
- Figure 3 represents a front view of the protective cup fixed to the plate with the waterproofing sheet.
- Figure 4 represents a side view of solar panels installed on a roof using a pair of supports.

A list of the references used in the figures is provided below:
1. Roof.
2. Plate.
3. Elevation.
4. Bolt.
5. Screws.
6. Protective cup.
7. Nut.
8. Pin.
9. Waterproofing sheet.
10. Anchoring elements.
11. Solar panels.
12. Internal sealing gasket.
13. External sealing gasket.

### PREFERRED EMBODIMENT OF THE INVENTION

The present invention relates to a support for fixing solar panels (11) to roofs (1) whereby waterproofing solutions are achieved and it is independent of the height of the panels (11), which can be in an inclined position, greatly facilitating the assembly and disassembly of the solar panels (11) of an installation.

The support of the invention is intended to be fixed on a roof (1) that, preferably, is flat, without this being an impediment to installing the supports on the roof (1) due to a roof that has tiles, is vaulted or has any other configuration.

The main elements that make up the support are: a plate (2), a waterproofing sheet (9) and a protective cup (6).

The plate (2) is configured as a flat surface that, in the central area, has an elevation (3) from which a bolt (4) protrudes. In the peripheral area, it has a series of holes for inserting screws (5) by means of which the plate (2) will be fixed to the roof (1).

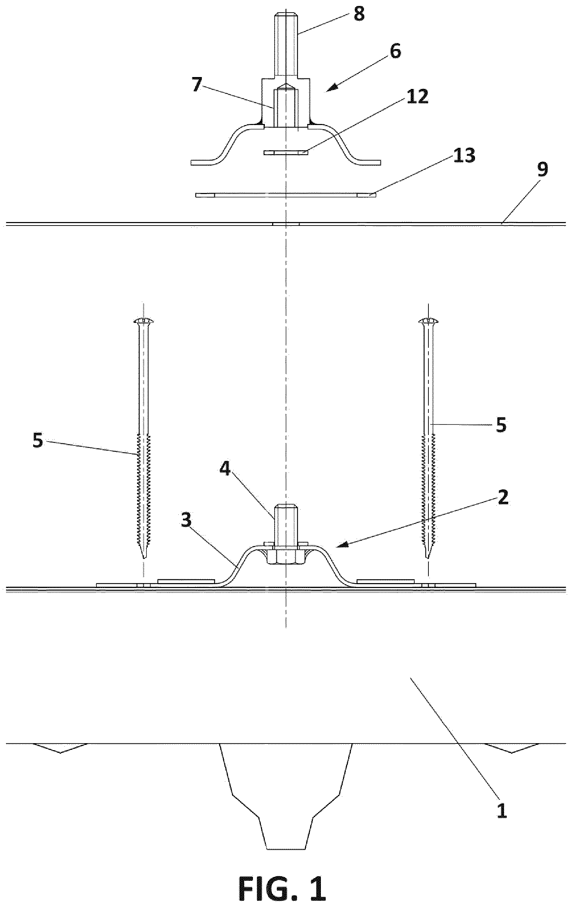

Figure 1 represents the plate (2) placed on a roof (1) with screws (5) that will be responsible for fixing it, the waterproofing sheet, intended to be located on the plate (2), whereby it has a hole through which the bolt (4) of the plate (2) will be inserted, and the protective cup, intended to be screwed onto the bolt (4) using the nut (7) that it incorporates.

The protective cup (6) is configured as a flat surface that, in the central area, has a bell shape from which a nut (7) protrudes, accessible from the inside of the protective cup (6) and with the other blind end and ending in a threaded pin (8).

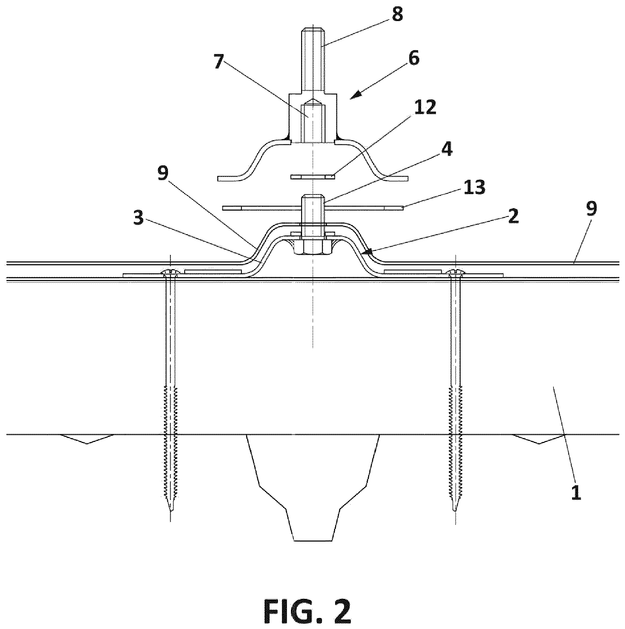

Figure 2 represents a subsequent step in the process of installing the support on the roof (1), which shows that the plate (2) is already fixed to the roof (1) via the screws (5) and the sealing gaskets (12, 13) and the protective cup (6) will be subsequently located.

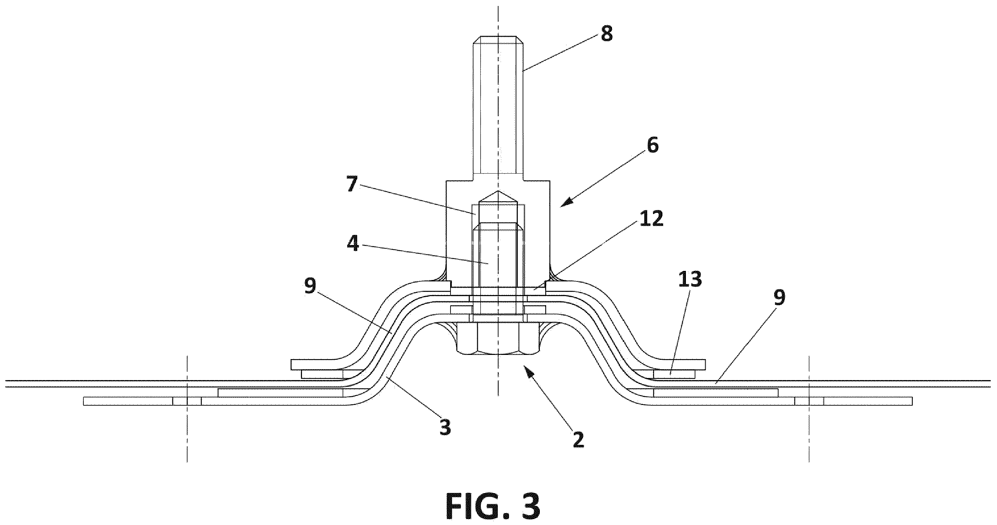

Figure 3 represents the support as it would be located on the roof (1), without being screwed, having all the components.

The pin (8) of the protective cup (6) has the function of housing anchoring elements (10) for fixing the solar panels (11). These anchoring elements (10) may consist of rigid sheets that directly connect the support to the solar panels (11), and may also include extension elements to join to the solar panels (11) at different heights and thus achieve the necessary inclination of the solar panels (11).

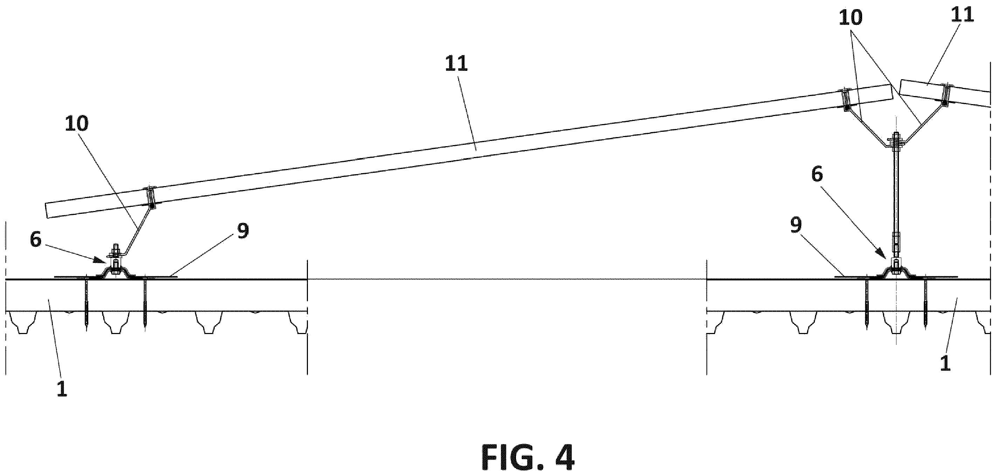

Figure 4 represents solar panels (11) installed on a roof (1) using supports, which shows the anchoring elements (10) that fix the protective cup (6) of the supports to the solar panels (11).

The process of mounting solar panels (11) on a roof (1) using the supports of the invention is as indicated sequentially in the figures. A brief description of this process is provided below.

Initially, the plate (2) is fixed to the roof (1) using a series of screws (5). The plate (2) will serve as a base for the installation of the entire solar panel (11) structure that is installed, either directly using the aforementioned anchoring elements (10) or indirectly using beams.

Placed on the plate (2) is a waterproofing sheet (9), on which a hole has been made so that the bolt (4) of the plate (2) can pass through it.

Placed on the waterproofing sheet (9) is an internal sealing gasket (12), on the bolt (4), and an external sealing gasket (13), on which the protective cup (6) is placed.

The protective cup (6) is placed on the external sealing gasket (13), supporting it with the peripheral flat surface, in order to screw the bolt (4) of the plate (2) onto the nut (7) of the protective cup (6), on the internal sealing gasket (12).

In this way, waterproofing of the roof (1) with very high resistance is achieved. The water that falls on the roof (1) cannot pass through the holes made with the screws (5) for fixing the support, as the waterproofing sheet (9) is present. This sheet (9) is fixed to the roof (1) over the entire surface, not just peripherally, thus making it practically impossible for water to pass through it, not even if the roof (1) is flooded. Likewise, water could not enter inside the protective cup (6) in the event of flooding, as the external sealing gasket (13) is present. Even if there were a leak and water could enter inside the protective cup (6), the only access it would have would be through the hole made for the bolt (4) to pass through.

However, the plate (2) has an elevation (3) to prevent this possible entry of water, where the internal sealing gasket (12) is located and which, in addition, is located at a height, above the elevation (3) of the plate (2).

With the described assembly, as many supports as necessary can be placed on a roof (1) to have an area of pins (8) intended to house the anchoring elements (10) of the solar panels (11) to be installed or even rails where a strip of solar panels (11) is already installed.

Figure 4 shows that the disassembly of the solar panels (11) is extremely simple, where only the anchoring elements (10) of the solar panels (11) would have to be unscrewed.

If it were necessary to replace the waterproofing sheet (9), for example, it would only be necessary to disengage the anchoring elements (10) from the pin (8) and subsequently, as shown in figure 2, unscrew the protective cup (6) and remove the sealing gaskets (12, 13) to access the waterproofing sheet (9) to replace it or, alternatively, place an additional one on the one that already exists.

## Claims

1. A support for fixing solar panels to a roof, comprising:
- a plate (2), intended to be fixed to the roof (1) using a plurality of screws (5),
- a waterproofing sheet (9) intended to be fixed on the roof (1) covering the plate (2), and
- a protective cup (6), intended to be fixed to the plate (2),
wherein:
- the plate (2) comprises a bolt (4) for fixing to the protective cup (6),
- the waterproofing sheet (9) has a hole for the bolt (4) to pass through, and
- the protective cup (6) comprises a nut (7) with one end accessible from the inner surface of the protective cup (6) and with the other end being blind and incorporating a pin (8).

2. The fixing support of claim 1, wherein the plate (2) comprises an elevation (3) for the location of the bolt (4).

3. The fixing support of claim 1, which comprises an internal sealing gasket (12) to seal the joint between the bolt (4) and the waterproofing sheet (9) and an external sealing gasket (13) to seal the joint between the protective cup (6) and the waterproofing sheet (9).

## Patentansprüche

1. Träger zur Befestigung von Solarmodulen auf einem Dach, umfassend:
- eine Platte (2), die mit einer Vielzahl von Schrauben (5) auf dem Dach (1) befestigt wird,
- eine Abdichtungsfolie (9), die auf dem Dach (1) befestigt wird und die Platte (2) abdeckt, und
- eine Schutzschale (6), die an der Platte (2) befestigt wird,
wobei:
- die Platte (2) einen Bolzen (4) zur Befestigung an der Schutzkappe (6) umfasst,
- die Abdichtungsfolie (9) ein Loch zur Durchführung des Bolzens (4) aufweist, und
- die Schutzschale (6) eine Mutter (7) umfasst, deren eines Ende von der Innenfläche der Schutzschale (6) aus zugänglich ist und deren anderes Ende blind ist und einen Stift (8) enthält.

2. Befestigungsträger nach Anspruch 1, wobei die Platte (2) eine Erhöhung (3) zur Aufnahme des Bolzens (4) umfasst.

3. Befestigungsträger nach Anspruch 1, der eine innere Dichtung (12) zum Abdichten der Verbindung zwischen dem Bolzen (4) und der Abdichtungsfolie (9) und eine äußere Dichtung (13) zum Abdichten der Verbindung zwischen der Schutzschale (6) und der Abdichtungsfolie (9) umfasst.

## Revendications

1. Support pour la fixation de panneaux solaires sur un toit, comprenant :
- une plaque (2), destinée à être fixée au toit (1) à l'aide d'une pluralité de vis (5),
- une feuille d'étanchéité (9) destinée à être fixée sur le toit (1) recouvrant la plaque (2), et
- un capuchon de protection (6), destiné à être fixé à la plaque (2),
dans lequel :
- la plaque (2) comprend un boulon (4) pour la fixation au capuchon de protection (6),
- la feuille d'étanchéité (9) a un trou pour le passage du boulon (4), et
- le capuchon de protection (6) comprend un écrou (7) avec une extrémité accessible depuis la surface intérieure du capuchon de protection (6) et avec l'autre extrémité étant aveugle et incorporant une goupille (8).

2. Support de fixation selon la revendication 1, dans lequel la plaque (2) comprend une élévation (3) pour l'emplacement du boulon (4).

3. Support de fixation selon la revendication 1, qui comprend une rondelle d'étanchéité interne (12) pour sceller le joint entre le boulon (4) et la feuille d'étanchéité (9) et une rondelle d'étanchéité externe (13) pour sceller le joint entre le capuchon de protection (6) et la feuille d'étanchéité (9).
